# EUROPEAN PATENT SPECIFICATION

(11) **EP 4 241 951 B1**
(45) Date of publication and mention of the grant of the patent: **07.05.2025**
(21) Application number: 22160582.7
(22) Date of filing: 07.03.2022
(51) Int. Cl.: B28B 11/24, B28B 17/00, F27B 9/36, F27B 9/40

(54) **A METHOD FOR MANUFACTURING A CERAMIC TILE AND AN EQUIPMENT FOR MANUFACTURING A CERAMIC TILE**
VERFAHREN ZUR HERSTELLUNG VON EINER KERAMIKFLIESE UND EINE AUSRÜSTUNG ZUR HERSTELLUNG EINER KERAMIKFLIESE
UN PROCÉDÉ DE FABRICATION D'UN CARRELAGE CÉRAMIQUE ET ÉQUIPEMENT POUR LA FABRICATION D'UN CARRELAGE CÉRAMIQUE

(43) Date of publication of application: 13.09.2023
(73) Proprietor: Marazzi Group Srl, 41049 Sassuolo (IT)
(72) Inventor: PAGANELLI, Daniele, 41123 Modena (IT)
(74) Representative: Unilin Technologies

(56) References cited:
- EP-A1- 1 500 889
- EP-A2- 1 884 730
- WO-A1-2007/085317
- WO-A2-2015/015263
- SU-A1- 426 126

## Description

A method for manufacturing a ceramic tile and an equipment for manufacturing a ceramic tile.

The present invention relates to a method for manufacturing a ceramic tile, in particular a floor, wall, ceiling or furniture tile, and to an equipment for manufacturing a floor tile. Ceramic tiles are manufactured via firing at high temperature, in continuous roller kiln, of a green tile comprising ceramic raw materials in form of compacted powders. During firing said powders are sintered to consolidate the ceramic material and reduce the residual porosity thereof. The high degree of sintering, especially in low porous materials like porcelain, causes a relevant shrinkage of the tile that, if not well balanced, can lead to dimensional and/or shape deformations in the final product.

Usually, in private practice, said deformations are corrected by intervening on one or more process parameters, not necessarily belonging to the firing process, like for example pressing conditions of the powders, firing temperatures, change of materials etc. Said correction are always done manually and are based on the experience of the operator so that they are approximated and can become effective only after several trials and after the production of scraps and/or of second choice material.

Moreover, the measurement of said deformation is made only on selected samples and, since the tiles are hot at the exit of the kiln, is often delayed to the moment when the operator can handle the sample for the measurement, so that the resulting measured deformation doesn't precisely reflect the real deformation of the product.

WO 2007/085317 A1 discloses a method for manufacturing ceramic tiles in accordance with the preamble of claim 1 and a corresponding system.

The present invention aims in the first place to provide an alternative method for manufacturing ceramic tile, which, in accordance with several of its preferred embodiments, is directed to solve one or more of the problems arising in the state of the art.

Thereto, the present invention, according to its first independent aspect, relates to a method for manufacturing ceramic tiles that comprises the steps of providing a green tile formed by a mixture of ceramic raw materials, firing said green tile in a kiln to obtain a ceramic tile, said kiln being configured to fire the green tile according to a firing cycle defined by one or more firing parameter. The method of the invention has the characteristic that it comprises the steps of measuring a shape and/or dimension parameter of the obtained ceramic tile, and the step of adjusting the firing parameter on the basis of said measurement, in accordance with the wording of claim 1. Thanks to said adjustment, the efficacy of the manufacturing process can be improved.

Preferably, while one parameter is adjustable, the remaining parameters can be kept constant (are not adjusted). In this way, it is possible to minimize interaction of multiple parameters and the adjustment is more effective.

Said firing parameters can further comprise maximum temperature, heating rate, firing time. The inventor has found that, by acting on the cooling rate of the firing process, it is possible to improve the efficacy of the correction since the risk influence of further factors is minimized.

It is noted that, in the most preferred embodiment, said firing cycle comprise an upper firing cycle, acting on an upper surface of the tile, and a lower firing cycle, acting on a lower surface of the tile. Said upper and lower firing cycles are defined by respective upper and lower firing parameters. Said upper and lower firing cycle can be identical or differ each other in one or more firing parameters. Preferably, said adjustable firing parameters can be both or only one of the upper and lower correspondent firing parameters, for example upper and lower cooling rate.

It is also noted that the firing cycle comprises a heating stage and a cooling stage. Said cooling stage comprises one or more parts, preferably two, even more preferably three cooling parts. In particular, the first cooling part starts from the maximum temperature of the firing cycle, for example above 900°C, preferably between 900°C and 1250°C, and ends at a temperature around 800°C, for example between 750°C and 850°C. In case the final ceramic tile comprises a glassy phase, as it will also be explained below, said first cooling part can preferably end at a temperature preferably slightly below, the glass transition temperature of said glassy phase. For example, said first cooling part can end at a temperature being 50°C more or 50°C less than said glass transition temperature. The second cooling part starts from the end of the first cooling part and ends at a temperature around 570°C, in particular said end temperature of the second period substantially corresponds to the transition temperature between β-quartz and α-quartz. The third cooling part starts from the end of the second cooling part and ends at the exit of the kiln, for example at a temperature around 150°C. Each of the first, second and third cooling part comprises a respective first, second and third cooling rate. Preferably, each cooling part comprises a respective upper and lower cooling rate, just by way of example the first cooling part comprises an upper and a lower first cooling rate. It is noted that the second cooling part shows a cooling rate that is generally lower than in the first and second cooling part. This due to the fact that an uncomplete transformation of the quartz from β-quartz to α-quartz could lead to fractures in the tile. Preferably, according to some embodiments of the invention, the cooling rate is adjusted in the first and/or in the second cooling rate for correcting said deformation.

Preferably, said cooling can be either direct or indirect. In case of direct cooling cool air (air at a lower temperature of the tile) can be blown directly on the upper and lower surface of the tile; in case of indirect cooling said fresh air is blown in tubes disposed below and above the tile, in such a way that the cooling is slower than in the direct cooling. Preferably, cooling is direct in the first and/or second cooling part. Preferably, cooling is indirect in the third cooling part. Preferably said cooling rate is adjusted by varying the flow condition, for example flow rate, temperature, speed, of the fresh air, either in the indirect or direct cooling.

The shape and/or dimension parameter are measured by a measuring device connected to a control unit. Said control unit is connected to the kiln for adjusting said firing parameter. In this way the firing parameters can be adjusted immediately after said measurement so that production of scrap of second choice material can be minimized. Moreover, said adjustment can be based on a plurality of shape and/or dimension parameter measured on a same tile or on multiple tiles so that said measurement and the consequent adjustment is more accurate. Preferably said measuring device comprises optical sensor. The inventor has found that by using optical sensor the measuring can be quicker and also more accurate that by using contact sensor. In this way the measurement can be performed immediately after the exit of the kiln so that production of scrap or second choice material limited to the material in the cooling part of the kiln. In some embodiments, said deformation can be measured immediately at the exit of the kiln. In alternative embodiments, said deformation can be measured after a predetermined time after the exit of the tile from the kiln, said predetermined time preferably being at least 10min, for example at least 20min. For example, said deformation can be measured when the temperature of the tile is below a predetermined threshold temperature, said threshold temperature preferably 150°C, for example below 100°C. In this way, it may be possible to prevent influence of the temperature of the tile on the optical measuring, moreover after said predetermined time, the tile is stabilized, and the deformation becomes definitive.

In the preferred embodiment, the measuring device comprises a device configured to measure the planarity deviation of the tile. The planarity deviation is the deviation, with respect to the flat surface, of the center of the tile. In practice, a non-planar tile can be either concave or convex; if it's concave, the tile shows an upward concavity and the center of the tile stays on a lower plane than the corners; if it's convex, the tile shows a downward concavity, and the center of the tile stays on an upper plane than the corners. The inventor, during private research has found that the planarity deviation can be caused by several factors of the whole manufacturing process of the tile including, for example, pressing condition, firing conditions, both during heating or cooling, composition of the green tile.

During private research the inventor has found that said planarity deviation can be corrected by adjusting the cooling rate, in particular by acting on the upper and/or lower cooling rate. More in detail, the inventor has found that in case the measured planarity deviation shows a concave tile, said deviation can be corrected by increasing the upper cooling rate. The inventor has also found that in case the measured planarity deviation shows a convex tile, said deviation can be corrected by increasing the lower cooling rate. During said private research, the inventor has found that the cooling rate influences the final volume of the tile. To a higher cooling rate, corresponds a higher volume. Therefore, if the tile tends to be concave, by increasing the cooling the upper cooling rate, the volume of the upper part of the tile will be higher than the lower one so that the deformation that causes the concavity can be compensated. It is noted that by acting on the upper and/or cooling rate it may be possible to correct planarity deviations caused by upstream factors of the process like, for example, pressing condition without intervening on said upstream factors themselves. Therefore, the correction of the planarity can be performed in an easy way without the need of intervening on multiple factors that could cause other deformation.

During internal observation the inventor has found that the tiles obtained in standard processes have the tendency to be convex rather than concave. The inventor has observed that said planarity deformation can be due to the fact that cooling can be more efficient, and thus the cooling rate higher, on the upper surface of the tile. This may be due to a sort of thermal shield effect caused by the presence of the roller and by the difficulty of blowing fresh air upward in a hot environment. Therefore, in the most preferred embodiment, said adjustment of the cooling rate is performed especially, or even exclusively, on the upper cooling rate. This preferred embodiment a convex planarity deviation can be adjusted by lowering down the upper cooling rate. On the other hand, a concave planarity deviation can be adjusted by increasing the upper cooling rate.

Preferably the tile comprises a support made of a ceramic material, for example porcelain, red body tile, earthenware, single fire wall tile. The tile can further comprise a top layer comprising one or more glaze layers. In the most preferred embodiment, the support is made of porcelain and preferably comprises one or more glaze layers on the upper surface.

In the preferred embodiment the support layer, of the fired tile, can comprise a glassy phase. Preferably said glassy phase is at least partially formed during the firing process.

Said glassy phase can represent up to the 80%, for example between 50 and 75% based on the total weight of the support. The inventor has found that it is particularly the glassy phase of the ceramic tile that shows the tendency to vary the volume according to the cooling rate, thereto in presence of a high quantity of glassy phase the adjustment of the cooling rate is more effective in contrasting the planarity deviation for ceramic material having a higher content of glassy phase. To this aim the effect of the cooling rate adjustment is particularly effective in case of tiles having one more glaze layer on the upper surface since said glazes are mostly or completely made of vitreous material.

The inventor has also found that the adjustment of the cooling temperature becomes particularly effective in contrasting the planarity deviation when the cooling rate is modified around the glass transition temperature of the glassy phase. Said firing parameter is adjusted on the basis of said measurement and on the basis of said glass transition temperature. In accordance with the invention said cooling rate is adjusted when the temperature of the tile is in a range between 50°C more and 50°C less than the glass transition temperature of the glassy phase, for example between 750°C and 850°C. In fact, the inventor has surprisingly found that final volume of the tile changes when the cooling rate is changed in proximity of the glass transition temperature of the glassy phase. To this aim the cooling rate can be adjusted across the transition between the first and the second cooling part of the firing cycle. Preferably the cooling rate can be adjusted only in a limited portion of the first and/or of the second cooling part of the firing cycle.

The method may conveniently comprise the step of determining the glass transition temperature of the mixture of raw materials of the green tile, i.e. of the glassy phase of the tile, and/or of any glaze layers and adjusting said firing parameter on the basis of said determined values. In some embodiment, said determined value can be stored in a memory connected to the control unit, for example a personal computer, for controlling the kiln.

The kiln can comprise multiple temperature sensors, for example thermocouple, for measuring the temperature in the kiln in multiple points or sector of the kiln, so to that the temperature of the tile during its advancement in the kiln can be monitored. Preferably, said temperature sensors can be connected to the control unit that controls the kiln so that the adjustment of the cooling rate can be commanded only where it can be most effective, for example where the temperature is in proximity of the glass transition temperature of the glassy phase. In this way, for example only certain cooling means of the kiln can be controlled, i.e. those located in the portion of the kiln where the temperature is close the glass transition temperature of the kiln.

A second independent aspect of the invention relates to a system for carrying on the method of the first aspect. In particular, said second aspect provides for a system for manufacturing ceramic tiles comprising: a kiln configured for fire green ceramic tile according to a firing cycle defined by one or more firing parameters to obtain a ceramic tile, said kiln comprising one or more means for controlling said firing parameters; a device for measuring a shape and/or dimension parameter of the ceramic tile; a control unit connected to the device and to the kiln and configure to control said means on the basis of the measured value.

Said kiln preferably is a continuous kiln having a inlet opening and an exit opening. Said kiln can be a roller kiln. Rollers have the advantage that the tiles run on the rollers in form of one layer so that heat exchange at the upper and lower surface of the tile is optimized.

Said devices for controlling the parameters can comprise burners, blowers for hot hair, fresh air flow valves, engine for rotating the rollers etc.

Said device for measuring the shape and/or dimension parameter can comprise optical sensor. For example, said device is a device configured to measure a planarity deviation of the ceramic tile. Said device can be for example a laser gauges for applications on industrial processing lines.

With the intention of better showing the characteristics of the invention, in the following, as an example without any limitative character, several preferred forms of embodiments are described with reference to the accompanying drawings, wherein:
Figure 1 schematically shows some step of a method according to the invention, and a system for carrying on the invention;
Figure 2 shows a firing cycle for ceramic tile according to the invention;
Figure 3a and 3b show a schematic side view respectively of a concave and of a convex tile.

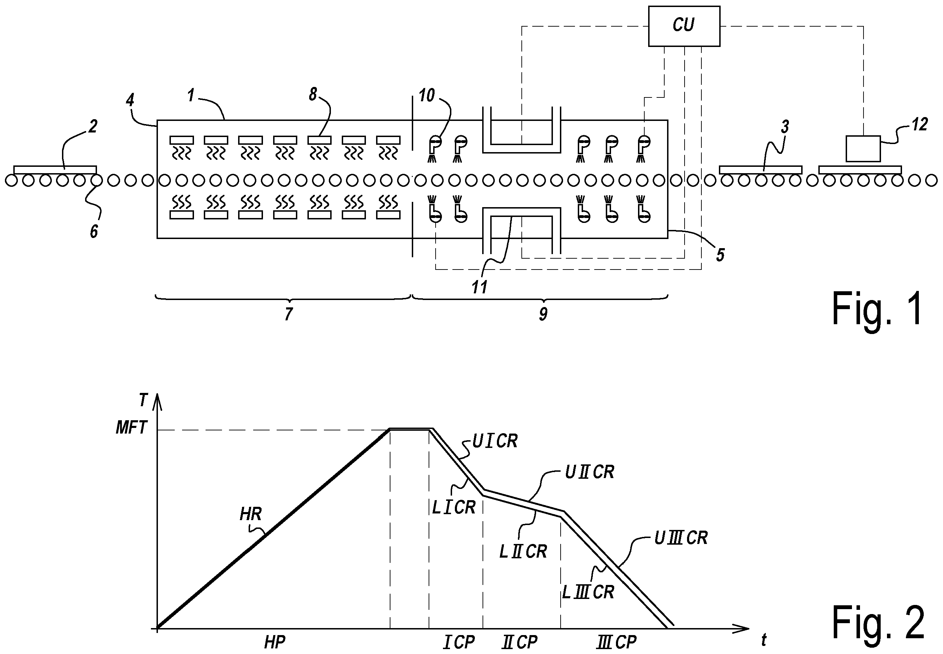

Figure 1 shows a roller kiln 1 for firing a green tile 2 to obtain a ceramic tile 3. The kiln 1 has an inlet opening 4 and an exit opening 5.

The green tile 2 has an upper and a lower surface. The green tile comprising at least a support made of a mixture of ceramic raw materials like, for example clays, kaolin, feldspar, calcium carbonate, zirconium silicate, talc, quartz and frits. The ceramic mixture forming the support of the green tile is configured for forming a glassy phase in the support of the ceramic tile 3. In the example said mixture is a mixture for porcelain tiles or slabs for floor, wall or furniture, and is configured for forming a glassy phase of for example between 50 and 70% based on the total weight of the support. The green tile 2, and consequently the ceramic tile 3, can comprise one or more glaze layers covering the upper surface of the support. It is noted that within the context of the present invention with ceramic tile 3 it is meant a ceramic tile after completion of the firing process in the kiln 1 and thus the expression ceramic tile it is used to refer to a tile after the exit from the kiln 1, whereas the expression green tile is used before and inside the kiln 1.

The kiln 1 comprises a plurality of motorized rollers 6 for advancing the green tile 2 from the inlet opening 4 toward the exit opening 5, the rollers supporting the lower surface of the green tile 2.

The kiln 1 comprises a heating portion 7 closer to the inlet opening 4 provided with burners 8 disposed above and below said rollers. Downstream to said heating portion 7, the kiln 1 is provided with a cooling portion 9 until the exit opening 5. Said cooling portion 9 is provided by first cooling means 10, for example air blowers or fans connected to tubes provided with ejecting nozzles or orifices, for direct cooling of the fired tile 2. In particular, the first cooling means are adapted to blow or convey a flow of air directly in contact with the tile. Preferably, said first cooling means 10 are disposed above and/or below said rollers 6 in such a way to blow fresh air on the upper and lower surface of the tile respectively. Said cooling part 9 is also provided by second cooling means 11 for indirect cooling of the green tile 2. In particular, the second cooling means comprise closed tubes for the flow of fresh air in the cooling portion for receiving heat from the tile. Preferably, said second cooling means 11 are disposed above and/or below said rollers 6. It is noted that within the context of the present invention with "fresh air" it is meant air that is colder than the tile, and that it can be used to cool the tile.

Figure 1 further shows a device 12 configured to measure a shape and/or dimension parameter of the tile 3. The device 12 is disposed downstream the exit 5 of the kiln 1. In the preferred embodiment said device 12 comprises an optical sensor adapted to determine a planarity deviation of the ceramic tile 3. For example, the device 12 is laser gauges for applications on industrial processing lines.

The device 12 is connected to a control unit CU, for example a computer, that is connected to the first and/or the second cooling means 10, 11 for controlling them.

Figure 2 schematically a possible firing cycle for firing ceramic tiles 3 using the kiln 1 shown in figure 1. In particular, figure 2 shows two firing cycles slightly different each other and active respectively on the upper surface and on the lower surface of the fired tile 2.

Figure 2 shows that the firing cycle comprises a heating part HP wherein the temperature T of the green tile 2 increases with a substantially constant heating rate HR up to a maximum firing temperature MFT. Said heating rate being for example comprised between 80 and 150°C/min. Figure 2 shows that heating rate can be slightly different on the upper surface of the tile and on the lower surface and that the heating part comprises an upper heating rate UHR and a lower heating rate LHR.

Figure 2 shows that the maximum firing temperature can be maintained substantially constant for a predetermined interval. The maximum firing temperature MFT is preferably above 1000°C, for example for porcelain tiles, being between 1200°C and 1270°C.

Figure 2 shows that the firing cycle comprises a first cooling part ICP where the temperature T of the fired tile 2 decreases with a substantially constant first cooling rate ICR from the maximum firing temperature MFT down to a first end temperature, preferably between 750°C and 850°C, said first end temperature being preferably in a range of between 50°C more and 50°C less than the glass transition temperature TG of the glassy phase of the ceramic tile 3. Said first cooling rate being for example comprised between 120 and 150 °C/min. Figure 2 shows that first cooling rate can be slightly different on the upper surface of the tile and on the lower surface and that the first cooling part comprises an upper first cooling rate UICR and a lower first heating rate LICR. Preferably during said first cooling part ICP the fired tile 2 is cooled via the direct cooling through the first cooling means 10.

Figure 2 shows that the firing cycle comprises a second cooling part IICP where the temperature T of the fired tile 2 decreases with a substantially constant second cooling rate IICR from the first end temperature down to a second end temperature, preferably below 570 °C. Said second cooling rate is lower than the first cooling rate, for example is between 100 and 80 °C/min. Figure 2 shows that second cooling rate can be slightly different on the upper surface of the tile and on the lower surface and that the second cooling part comprises an upper second cooling rate UIICR and a lower second heating rate LIICR. Preferably during said second cooling part IICP the fired tile 2 is cooled via the indirect cooling through the second cooling means 11.

Figure 2 shows that the firing cycle comprises a third cooling part IIICP where the temperature T of the fired tile 2 decreases with a substantially constant third cooling rate IIICR from the second end temperature down to a final temperature, preferably around 100 °C. Said third cooling rate is higher than the second cooling rate, for example is between 120 and 150 °C/min. Figure 2 shows that third cooling rate can be slightly different on the upper surface of the tile and on the lower surface and that the second cooling part comprises an upper third cooling rate UIIICR and a lower third heating rate LIIICR. Preferably during said third cooling part IIICP the fired tile 2 is cooled via the direct cooling through the first cooling means 10.

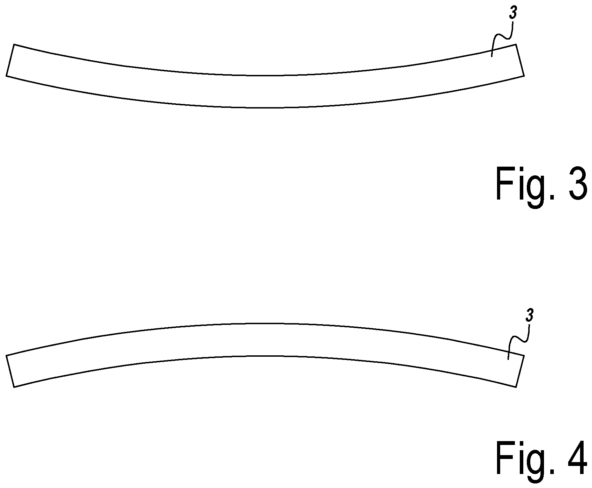

Figure 3a illustrates a concave tile 3 that shows a concavity directed upward; Figure 3b illustrates a convex tile 3 that shows a concavity directed upward.

When the device 12 measures a planarity deviation PD corresponding to a concave tile 3, as shown in figure 3a, the control unit CU commands the first or second cooling means 10, 11 to increase the upper first cooling rate UICP and/or the upper second cooling rate UIICP. In the preferred embodiment, for example, the CPU commands the first cooling means 10 to increase the flow rate of fresh air directed towards the upper surface of the fired tile 2 in the first cooling part ICP of the cycle. Preferably the upper first cooling rate is increased in an adjustment area AA of the firing cycle where the adjustment of the cooling rate is more effective for correcting the planarity deviation, said adjustment area AA being close to the first end temperature, preferably between 50°C more and 50°C less than the glass transition temperature TG of the glassy phase of the ceramic tile 3.

When the device 12 measures a planarity deviation PD corresponding to a convex tile 3, as shown in figure 3b, the control unit CU commands the first or second cooling means 10, 11 to increase the lower first cooling rate LICR and/or the lower second cooling rate LIICR. In the preferred embodiment, for example, the CPU commands the first cooling means 10 to increase the flow rate of fresh air directed towards the lower surface of the green tile 2 in the first cooling part ICP of the cycle. Preferably the lower first cooling rate LICR is increased in an adjustment area AA of the firing cycle where the adjustment of the cooling rate is more effective for correcting the planarity deviation, said adjustment area AA being close to the first end temperature, between 50°C more and 50°C less than the glass transition temperature TG of the glassy phase of the ceramic tile 3.

The method of the invention can also comprise the step of manufacturing a sample od mixture of raw material for forming the green tile 2 and measuring the glass transition temperature TG of the glassy phase formed by said mixture. Said sample can be manufactured and tested in a laboratory. The method subsequently, can comprise storing the measured value of glass transition temperature TG in a memory unit of said control unit CU, so that the control unit CU can adjust the cooling rate on the basis of said glass transition temperature TG and of said measured planarity deviation PD.

The present invention is in no way limited to the hereinabove described embodiments, but such equipment and/or plant may be realized according to different variants without leaving the scope of the present invention.

## Claims

1. A method for manufacturing ceramic tiles (3) that comprises the steps of providing a green tile (2) formed by a mixture of ceramic raw materials, firing said green tile (2) in a kiln (1) to obtain a ceramic tile (3), said kiln (1) being configured to fire the green tile (2) according to a firing cycle defined by one or more firing parameter (HR, MFT, UICR, UIICR, UIIICR, LICR, LIICR, LIIICR), wherein it comprises the steps of measuring a shape and/or dimension parameter of the obtained ceramic tile (3), **characterized by** the step of adjusting a cooling rate (UICR, UIICR, UIIICR, LICR, LIICR, LIIICR) in the kiln (1) between 50°C above or 50°C below the glass transition temperature of a glassy phase of the tile (3) on the basis of said measurement, preferably while one parameter is adjustable the remaining parameters are to be kept constant.

2. The method according to claim 1, **characterized in that** said firing parameters can comprise maximum temperature, heating rate, cooling rate, firing time.

3. The method according to claim 1 or 2, **characterized in that** said firing cycle comprises an upper firing cycle, acting on an upper surface of the tile, and a lower firing cycle, having respective upper and lower firing parameter (UICR, UIICR, UIIICR, LICR, LIICR, LIIICR), wherein said adjustable firing parameters comprise at least one of the upper and lower correspondent firing parameters, preferably upper cooling rate (UICR, UIICR, UIIICR) and lower cooling rate (LICR, LIICR, LIIICR).

4. The method according to any of the preceding claims, **characterized in that** the firing cycle comprises:
- a first cooling part (ICP), preferably starting from the maximum temperature (MFT) of the firing cycle, and ending at a temperature around 800°C, for example between 750°C and 850°C, or ending at a temperature being 50°C more or 50°C less than a glass transition temperature of the ceramic tile, or of a glassy phase thereof, said first cooling part having a respective first cooling rate (UICR, LICR); and/or
- a second cooling part (IICP) that starts from the end of the first cooling part (ICP) and ends at a temperature around 570°C, said second cooling part having a second cooling rate (UIICR, LIICR); and/or
- a third cooling part (IICP) starting from the end of the second cooling part (IICP) and ending at the exit of the kiln (1), said third cooling part having a third cooling rate (UIICR, LIIICR).

5. The method according to any of the preceding claims, **characterized in that** said kiln (1) is adapted to cool the tile via indirect cooling and/or via direct cooling, and wherein the method comprises adjusting the cooling rate in said direct cooling.

6. The method according to any of the preceding claims, **characterized in that** the shape and/or dimension parameter can be preferably measured by a measuring device (12) connected to a control unit (CU), preferably said control unit being connected to the kiln (1) for adjusting said firing parameter.

7. The method according to claim 6, **characterized in that** said measuring device (12) comprises optical sensor.

8. The method according to any of the preceding claims, **characterized in that** said steps of measuring a shape and/or dimension parameter of the obtained ceramic tile (3) is measured:
- immediately at the exit of the kiln (1); or
- after a predetermined time after the exit of the tile (3) from the kiln (1), said predetermined time preferably being at least 10min, for example at least 20min; and/or
- when the temperature of the tile (3) is below a predetermined threshold temperature, preferably said threshold temperature being 150°C or below, for example below 100°C.

9. The method according to any of the preceding claims, **characterized in that** said steps of measuring a shape and/or dimension parameter of the obtained ceramic tile (3) comprises the planarity deviation of the tile.

10. The method according to claims 9 and 3, **characterized in that** in case the measured planarity deviation shows a convex tile (3), said deviation can be corrected by increasing a lower cooling rate (LICR, LIICR) or decreasing a upper cooling rate(UICR, UIICR); and/or in case in case the measured planarity deviation shows a concave tile, said deviation can be corrected by decreasing a lower cooling rate (LICR, LIICR) or increasing a upper cooling rate (UICR, UIICR).

11. The method according to any of the preceding claims, **characterized in that** the tile (3) comprises a top layer comprising one or more glaze layers.

12. The method according to any of the preceding claims, **characterized in that** the obtained fired tile (3) comprises a support having a glassy phase, preferably wherein said glassy phase represents up to the 80%, for example between 50 and 75% based on the total weight of the support.

13. The method according to any of the preceding claims, **characterized in that** it comprises the step of determining the glass transition temperature of the mixture of raw materials of the green tile, i.e. of the glassy phase of the tile, and/or of any glaze layers and adjusting said firing parameter on the basis of said determined values.

14. A system for manufacturing ceramic tiles (3), comprising:
- a kiln (1) configured for fire green ceramic tile (2) according to a firing cycle defined by one or more firing parameters (HR, MFT, UICR, UIICR, UIIICR, LICR, LIICR, LIIICR) to obtain a ceramic tile (3), said kiln (1) comprising one or more devices (8, 10, 11) for controlling said firing parameters (HR, MFT, UICR, UIICR, UIIICR, LICR, LIICR, LIIICR);
- a device (12) for measuring a shape and/or dimension parameter of the ceramic tile (3);
- a control unit (C) connected to the measuring device (12) and to the kiln (1) and configured to control said devices (9,10,11) of the kiln (1) on the basis of the measured value, in accordance with the method as per the preceding claim 1.

## Patentansprüche

1. Verfahren zur Herstellung von Keramikfliesen (3), das die folgenden Schritte umfasst: das Bereitstellen einer unbehandelten Fliese (2), die durch eine Mischung aus keramischen Rohmaterialien erzielt wird; das Brennen der oben genannten unbehandelten Fliese (2) in einem Ofen (1), um eine Keramikfliese (3) zu erzielen, wobei der oben genannte Ofen (1) zum Brennen der unbehandelten Fliese (2) in Übereinstimmung mit einem Brennzyklus konfiguriert ist, der durch einen oder mehrere Brennparameter (HR, MFT, UICR, UIICR, UIIICR, LICR, LIICR, LIIICR) definiert ist; wobei das oben genannte Verfahren die Schritte des Messens eines Konfigurations- und/oder Abmessungsparameters der erzielten Keramikfliese (3) umfasst; **gekennzeichnet durch** den Schritt des Einstellens einer Kühlgeschwindigkeit (UICR, UIICR, UIIICR, LICR, LIICR, LIIICR) in dem Ofen (1) bei einer Temperatur, die zwischen 50 °C über oder 50 °C unter der Glasübergangstemperatur einer Glasphase der Fliese (3) liegt, auf der Grundlage der oben genannten Messung; wobei vorzugsweise, während ein Parameter einstellbar ist, die übrigen Parameter konstant gehalten werden müssen.

2. Verfahren nach Anspruch 1, **dadurch gekennzeichnet, dass** die Brennparameter eine Maximaltemperatur, eine Heizgeschwindigkeit, eine Kühlgeschwindigkeit und eine Brenndauer umfassen können.

3. Verfahren nach Anspruch 1 oder 2, **dadurch gekennzeichnet, dass** der oben genannte Brennzyklus einen oberen Brennzyklus, der auf eine obere Oberfläche der Fliese wirkt, und einen unteren Brennzyklus umfasst, die entsprechende obere und untere Brennparameter (UICR, UIICR, UIIICR, LICR, LIICR, LIIICR) besitzen; wobei die Brennparameter, die eingestellt werden können, mindestens einen Parameter umfassen, der aus den entsprechenden oberen und unteren Brennparametern ausgewählt ist, vorzugsweise eine obere Abkühlungsgeschwindigkeit (UICR, UIICR, UIIICR) und eine untere Abkühlungsgeschwindigkeit (LICR, LIICR, LIIICR).

4. Verfahren nach einem der vorhergehenden Ansprüche, **dadurch gekennzeichnet, dass** der Brennzyklus Folgendes umfasst:
- einen ersten Kühlabschnitt (ICP), der vorzugsweise bei der Maximaltemperatur (MFT) des Brennzyklus beginnt und bei einer Temperatur um 800 °C endet, die beispielsweise zwischen 750 °C und 850 °C liegt, oder der bei einer Temperatur endet, die 50 °C über oder 50 °C unter der Glasübergangstemperatur der Keramikfliese oder einer Glasphase davon liegt; wobei der oben genannte erste Kühlabschnitt eine entsprechende erste Kühlgeschwindigkeit (UICR, LICR) besitzt; und/oder
- einen zweiten Kühlabschnitt (IICP), der mit dem Ende des ersten Kühlabschnitts (ICP) beginnt und bei einer Temperatur um 570 °C endet; wobei der oben genannte zweite Kühlabschnitt eine zweite Kühlgeschwindigkeit besitzt (UIICR, LIICR); und/oder
- einen dritten Kühlabschnitt (IIICP), der mit dem Ende des zweiten Kühlabschnitts (IICP) beginnt und an dem Ausgang des Ofens (1) endet; wobei der oben genannte dritte Kühlabschnitt eine dritte Kühlgeschwindigkeit (UIIICR, LIIICR) besitzt.

5. Verfahren nach einem der vorhergehenden Ansprüche, **dadurch gekennzeichnet, dass** der Ofen (1) so ausgelegt ist, dass er die Fliese über eine indirekte Kühlung und/oder über eine direkte Kühlung kühlt; und wobei das Verfahren das Einstellen der Kühlgeschwindigkeit in der oben genannten direkten Kühlung umfasst.

6. Verfahren nach einem der vorhergehenden Ansprüche, **dadurch gekennzeichnet, dass** die Konfigurations- und/oder Abmessungsparameter vorzugsweise mit einer Messvorrichtung (12) gemessen werden können, die mit einer Steuereinheit (CU) verbunden ist; wobei vorzugsweise die oben genannte Steuereinheit mit dem Ofen (1) verbunden ist, um den Brennparameter einzustellen.

7. Verfahren nach Anspruch 6, **dadurch gekennzeichnet, dass** die oben genannte Messvorrichtung (12) einen optischen Sensor umfasst.

8. Verfahren nach einem der vorhergehenden Ansprüche, **dadurch gekennzeichnet, dass** die oben genannten Schritte zum Messen eines Konfigurations- und/oder Abmessungsparameters der hergestellten Keramikfliese (3):
- direkt beim Verlassen des Ofens (1); oder
- nach einer vorbestimmten Zeitspanne, die auf die Entnahme der Fliese (3) aus dem Ofen (1) folgt; wobei die vorbestimmte Zeitspanne vorzugsweise mindestens 10 Minuten, beispielsweise mindestens 20 Minuten, beträgt; und/oder
- wenn die Temperatur der Fliese (3) unter einer Schwellentemperatur liegt, die vorbestimmt wurde; wobei die Schwellentemperatur vorzugsweise 150 °C oder weniger beträgt, z. B. weniger als 100° C, durchgeführt werden.

9. Verfahren nach einem der vorhergehenden Ansprüche, **dadurch gekennzeichnet, dass** die Schritte, in denen ein Konfigurations- und/oder Abmessungsparameter der erzielten Keramikfliese (3) gemessen wird, die Abweichung der Ebenheit der Fliese umfassen.

10. Verfahren nach den Ansprüchen 9 und 3, **dadurch gekennzeichnet, dass** in dem Fall, dass eine gemessene Planheitsabweichung eine Fliese (3) bildet, die eine konvex geformte Konfiguration besitzt, kann die Abweichung durch Erhöhen einer niedrigeren Kühlgeschwindigkeit (LICR, LIICR) oder Verringern einer höheren Kühlgeschwindigkeit (UICR, UIICR) korrigiert werden, und/oder in dem Fall, dass die gemessene Planheitsabweichung eine Fliese aufweist, die eine konkav geformte Konfiguration besitzt, kann die Abweichung durch Verringern einer niedrigeren Kühlgeschwindigkeit (LICR, LIICR) oder Erhöhen einer höheren Kühlgeschwindigkeit (UICR, UIICR) korrigiert werden.

11. Verfahren nach einem der vorhergehenden Ansprüche, **dadurch gekennzeichnet, dass** die Fliese (3) eine obere Schicht umfasst, die eine oder mehrere Glasurschichten umfasst.

12. Verfahren nach einem der vorhergehenden Ansprüche, **dadurch gekennzeichnet, dass** die nach dem Brennen erzielte Fliese (3) einen Träger umfasst, der eine Glasphase besitzt; vorzugsweise wobei die Glasphase einen Wert von bis zu 80 % aufweist, beispielsweise die zwischen 50 und 75 % liegt, bezogen auf das Gesamtgewicht des Trägers.

13. Verfahren nach einem der vorhergehenden Ansprüche, **dadurch gekennzeichnet, dass** es die folgende Schritte umfasst: das Bestimmen der Glasübergangstemperatur der Rohmaterialmischung der unbehandelten Fliese und/oder einer beliebigen Glasurschicht und das Einstellen des Brennparameters auf der Grundlage der Werte, die bestimmt worden sind.

14. System zur Herstellung von keramischen Fliesen (3), das Folgendes umfasst:
- einen Ofen (1), der zum Brennen einer unbehandelten Keramikfliese (2) in Übereinstimmung mit einem Brennzyklus konfiguriert ist, der durch einen oder mehrere Brennparameter (HR, MFT, UICR, UIICR, UIIICR, LICR, LIICR, LIIICR) definiert ist, um eine Keramikfliese (3) zu erzielen; wobei der Ofen (1) eine oder mehrere Vorrichtungen (8, 10, 11) umfasst, die zum Einstellen der Brennparameter (HR, MFT, UICR, UIICR, UIIICR, LICR, LIICR, LIIICR) bestimmt sind;
- eine Vorrichtung (12), die dazu bestimmt ist, einen Konfigurations- und/oder Abmessungsparameter der keramischen Fliese (3) zu messen;
- eine Steuereinheit (C), die mit der Messvorrichtung (12) und dem Ofen (1) verbunden ist und die für die Steuerung der Vorrichtungen (9, 10, 11) des Ofens (1) auf der Grundlage des Wertes, der gemessen wurde, in Übereinstimmung mit dem Verfahren, wie es im vorhergehenden Anspruch 1 angegeben ist, konfiguriert ist.

## Revendications

1. Procédé destiné à la fabrication de carreaux de céramique (3), qui comprend les étapes consistant à : procurer un carreau non traité (2) que l'on obtient par l'intermédiaire d'un mélange de matières premières céramiques ; soumettre ledit carreau non traité (2) à une cuisson dans un four (1) afin d'obtenir un carreau de céramique (3), ledit four (1) étant configuré pour la cuisson du carreau non traité (2) en conformité avec un cycle de cuisson qui est défini par un ou plusieurs paramètres de cuisson (HR, MFT, UICR, UIICR, UIIICR, LICR, LIICR, LIIICR) ; dans lequel ledit procédé comprend les étapes au cours desquelles on mesure un paramètre de configuration et/ou de dimension du carreau de céramique (3) que l'on a obtenu ; **caractérisé par** l'étape au cours de laquelle on ajuste une vitesse de refroidissement (UICR, UIICR, UIIICR, LICR, LIICR, LIIICR) dans le four (1) à une température qui se situe entre 50 °C au-dessus ou 50 °C ou en dessous de la température de transition vitreuse d'une phase vitreuse du carreau (3) sur la base de ladite mesure ; de préférence, alors qu'un paramètre peut être réglé, les paramètres restants doivent rester constants.

2. Procédé selon la revendication 1, **caractérisé en ce que** lesdits paramètres de cuisson peuvent comprendre une température maximale, une vitesse de chauffage, une vitesse de refroidissement, une durée de cuisson.

3. Procédé selon la revendication 1 ou 2, **caractérisé en ce que** ledit cycle de cuisson comprend un cycle de cuisson supérieur, qui agit sur une surface supérieure du carreau, et un cycle de cuisson inférieur, qui possèdent des paramètres respectifs de cuisson supérieur et inférieur (UICR, UIICR, UIIICR, LICR, LIICR, LIIICR) ; dans lequel lesdits paramètres de cuisson qui peuvent être réglés comprennent au moins un paramètre qui est choisi parmi les paramètres de cuisson supérieur et inférieur correspondants, de préférence une vitesse de refroidissement supérieure (UICR, UIICR, UIIICR) et une vitesse de refroidissement inférieure (LICR, LIICR, LIIICR).

4. Procédé selon l'une quelconque des revendications précédentes, **caractérisé en ce que** le cycle de cuisson comprend :
- une première partie de refroidissement (ICP), qui commence de préférence à partir de la température maximale (MFT) du cycle de cuisson et qui se termine à une température autour de 800 °C, par exemple qui se situe entre 750 °C et 850 °C, ou qui se termine à une température qui est supérieure, à raison de 50 °C, ou inférieure, à raison de 50 °C, à la température de transition vitreuse du carreau de céramique ou d'une phase vitreuse de ce dernier ; dans lequel ladite première partie de refroidissement possède une première vitesse de refroidissement respective (UICR, LICR) ; et/ou
- une deuxième partie de refroidissement (IICP) qui commence à partir de la fin de la première partie de refroidissement (ICP) et qui se termine à une température autour de 570 °C; dans lequel ladite deuxième partie de refroidissement possède une deuxième vitesse de refroidissement (UIICR, LIICR) ; et/ou
- une troisième partie de refroidissement (IIICP) qui commence à partir de la fin de la deuxième partie de refroidissement (IICP) et qui se termine à la sortie du four (1) ; dans lequel ladite troisième partie de refroidissement possède une troisième vitesse de refroidissement (UIIICR, LIIICR).

5. Procédé selon l'une quelconque des revendications précédentes, **caractérisé en ce que** ledit four (1) est conçu pour refroidir le carreau par l'intermédiaire d'un refroidissement indirect et/ou par l'intermédiaire d'un refroidissement direct ; et dans lequel le procédé comprend le fait de régler la vitesse de refroidissement dans ledit refroidissement direct.

6. Procédé selon l'une quelconque des revendications précédentes, **caractérisé en ce que** les paramètres de configuration/ou de dimension peuvent être mesurés de manière préférentielle à l'aide d'un dispositif de mesure (1)2 qui est raccordé à une unité de commande (CU) ; dans lequel, de préférence, ladite unité de commande est raccordée au four (1) pour le réglage dudit paramètre de cuisson.

7. Procédé selon la revendication 6, **caractérisé en ce que** ledit dispositif de mesure (12) comprend un capteur optique.

8. Procédé selon l'une quelconque des revendications précédentes, **caractérisé en ce que** lesdites étapes de mesure d'un paramètre de configuration/ou de dimension du carreau de céramique (3) que l'on a obtenu sont mises en œuvre :
- directement à la sortie du four (1) ; ou
- après un laps de temps prédéterminé qui fait suite à la sortie du carreau (3) à l'extérieur du four (1) ; dans lequel ledit laps de temps prédéterminé s'élève de manière préférentielle à au moins 10 minutes, par exemple à au moins 20 minutes ; et/ou
- lorsque la température du carreau (3) est inférieure à une température seuil qui a été prédéterminée ; dans lequel, de manière préférentielle, ladite température seuil s'élève à 150 °C ou moins, par exemple est inférieure à 100° C.

9. Procédé selon l'une quelconque des revendications précédentes, **caractérisé en ce que** lesdites étapes au cours desquelles on mesure un paramètre de configuration et/ou de dimension du carreau de céramique (3) que l'on a obtenu comprennent l'écart de planéité du carreau.

10. Procédé selon les revendications 9 et 3, **caractérisé en ce que**, dans le cas où un écart de planéité qui a été mesuré présente un carreau (3) possédant une configuration de forme convexe, ledit écart peut être corrigé en élevant une vitesse de refroidissement inférieure (LICR, LIICR) ou en diminuant une vitesse de refroidissement supérieure (UICR, UIICR), et/ou dans le cas où l'écart de planéité qui a été mesuré présente un carreau possédant une configuration de forme concave, ledit écart peut être corrigé en diminuant une vitesse de refroidissement inférieure (LICR, LIICR) ou en élevant une vitesse de refroidissement supérieure (UICR, UIICR).

11. Procédé selon l'une quelconque des revendications précédentes, **caractérisé en ce que** le carreau (3) comprend une couche supérieure qui comprend une ou plusieurs couches de glaçure.

12. Procédé selon l'une quelconque des revendications précédentes, **caractérisé en ce que** le carreau (3) que l'on obtient après sa cuisson comprend un support qui possède une phase vitreuse ; de préférence dans lequel ladite phase vitreuse représente une valeur s'élevant jusqu'à 80 %, par exemple qui se situe entre 50 et 75 % en se basant sur le poids total du support.

13. Procédé selon l'une quelconque des revendications précédentes, **caractérisé en ce qu'**il comprend les étapes au cours desquelles on détermine la température de transition vitreuse du mélange de matières premières du carreau non traité et/ou de n'importe quelle couche de glaçure, et on ajuste ledit paramètre de cuisson sur la base desdites valeurs que l'on a déterminées.

14. Système destiné à la fabrication de carreaux de céramique (3) qui comprend :
- un four (1) qui est configuré pour la cuisson d'un carreau de céramique non traité (2) en conformité avec un cycle de cuisson qui est défini par un ou plusieurs paramètres de cuisson (HR, MFT, UICR, UIICR, UIIICR, LICR, LIICR, LIIICR) dans le but d'obtenir un carreau de céramique (3) ; dans lequel ledit four (1) comprend un ou plusieurs dispositifs (8, 10, 11) qui sont destinés au réglage desdits paramètres de cuisson (HR, MFT, UICR, UIICR, UIIICR, LICR, LIICR, LIIICR) ;
- un dispositif (12) qui est destiné à mesurer un paramètre de configuration et/ou de dimension du carreau de céramique (3) ;
- une unité de commande (C) qui est raccordée au dispositif de mesure (12) et au four (1), et qui est configurée pour la commande desdits dispositifs (9, 10, 11) du four (1) sur la base de la valeur qui a été mesurée, en conformité avec le procédé tel qu'il est indiqué dans la revendication précédente 1.
